# EUROPEAN PATENT APPLICATION

(11) **EP 3 553 425 A1**
(43) Date of publication of application: **16.10.2019**
(21) Application number: 18751175.3
(22) Date of filing: 19.01.2018
(51) Int. Cl.: F25B 41/04, F25B 17/08, F25B 49/04, F24F 11/83, F24F 11/84

(54) **TRIDIRECTIONAL VALVE FOR INDEPENDENTLY CONTROLLING PASSAGES, AND ADSORPTION-TYPE FREEZING DEVICE AND ADSORPTION-TYPE FREEZING SYSTEM COMPRISING SAME**

(30) Priority: 09.02.2017 KR 20170017982
(71) Applicant: Gu-Sung Engineering & Construction Co., Ltd., Seoul 01114 (KR)
(72) Inventor: YUN, Suk Goo, Seoul 02190 (KR)
(74) Representative: Vossius & Partner Patentanwälte Rechtsanwälte mbB
(86) International application number: PCT/KR2018/000885
(87) International publication number: WO 2018/147569

(57) **Abstract**

An absorption-type freezing apparatus. A first absorber and a second absorber absorbing or releasing refrigerant receives one of cooling water and hot water selectively supplied from a cooling water supply line or a hot water supply line. A condenser is connected to the first absorber and the second absorber to condense the refrigerant released and supplied from the first absorber or the second absorber. An evaporator receives the condensed refrigerant, produces cold water using evaporation heat generated when the refrigerant evaporates, and selectively supplies the evaporated refrigerant to one absorber of the first absorber and the second absorber. A cooler and heater cools or heats air using the hot water supplied from the hot water supply line or the cold water produced in the evaporator. A valve unit controls the circulation of the cold water or the hot water circulating between the evaporator and the cooler and heater.

## Description

### CROSS REFERENCE TO RELATED APPLICATION(S)

This application claims the benefit of Korean Patent Application No. 10-2017-0017982, filed on February 09, 2017, which is hereby incorporated by reference in its entirety into this application.

### BACKGROUND OF THE INVENTION

### Field of the Invention

The present invention relates to a three-way valve for independent flow path control, and an absorption-type freezing apparatus and an absorption-type freezing system including the same.

### Description of the Related Art

A three-way valve refers to a valve having fluid ports in three directions. The three-way valve is generally an electric valve in combination with a control motor. The three-way valve is used as an automatic control valve for changing a flow path of hot water while regulating a flow rate of hot water in a hot water heating apparatus.

For example, Korean Utility Model Registration No. 20-0018001 discloses a fluid control valve.

### [Related Art Document]

Patent Document 1: Korean Utility Model Registration No. 20-0018001

### SUMMARY OF THE INVENTION

Accordingly, the present invention has been made keeping in mind the above problems occurring in the related art, and the present invention is intended to propose a three-way valve, and an absorption-type freezing apparatus and an absorption-type freezing system including the same, for opening or closing fluid ports disposed in three directions thereof by independently controlling the fluid ports.

Also provided are a three-way valve, and an absorption-type freezing apparatus and an absorption-type freezing system including the same, for freely controlling flows and flow rates of fluid by independently controlling the fluid ports.

In order to achieve the above object, according to the present invention, an absorption-type freezing apparatus may include: a first absorber and a second absorber to which one of cooling water and hot water is selectively supplied from a cooling water supply line or a hot water supply line, the first absorber and the second absorber absorbing or releasing refrigerant; a condenser connected to the first absorber and the second absorber, the condenser condensing the refrigerant released and supplied from the first absorber or the second absorber; an evaporator receiving the condensed refrigerant, producing cold water using evaporation heat generated when the refrigerant evaporates, and selectively supplying the evaporated refrigerant to one absorber of the first absorber and the second absorber; a cooler and heater cooling or heating air using the hot water supplied from the hot water supply line or the cold water produced in the evaporator; and a valve unit controlling the circulation of the cold water or the hot water circulating between the evaporator and the cooler and heater.

The valve unit may include a fluid supply valve disposed on a fluid path connecting a discharge side of the evaporator and an inlet side of the cooler and heater to selectively direct one of the cold water produced in the evaporator and the hot water from the hot water supply line to the cooler and heater.

The valve unit may include a fluid return valve disposed on a fluid path connecting a discharge side of the cooler and heater and an inlet side of the evaporator to selectively direct the cold water or the hot water circulating in the cooler and heater to one of the evaporator and the hot water return line.

The valve unit may include: a first valve selectively directing the cooling water from the cooling water line to one absorber of the first absorber and the second absorber; a second valve selectively directing the hot water from the hot water supply line to one absorber of the first absorber and the second absorber; a third valve selectively directing the hot water from one absorber of the first absorber or the second absorber to the hot water return line; and a fourth valve selectively directing the cooling water from one absorber of the first absorber or the second absorber to the cooling water return line.

The valve unit may include: a first valve connected to the cooling water supply line and the hot water supply line to selectively supply the cooling water or the hot water to the first absorber; a second valve connected to the cooling water supply line and the hot water supply line to selectively supply the cooling water or the hot water to the second absorber; a third valve connected to the first absorber, the cooling water supply line, and the hot water supply line to selectively direct the cooling water or the hot water from the first absorber to the cooling water supply line or the hot water supply line; and a fourth valve connected to the second absorber, the cooling water supply line, and the hot water supply line to selectively direct the cooling water or the hot water from the second absorber to the cooling water supply line or the hot water supply line.

The valve unit may include a fluid discharge valve disposed on a fluid path connecting the evaporator and the cooler and heater to discharge the cold water from the cooler and heater or the hot water from the hot water supply line to an external area.

The valve unit may be a three-way valve including: a valve housing having a first fluid port, a second fluid port, and a third fluid port, with the second fluid port and the third fluid port being located on a single line intersecting the first fluid port; a first valve unit disposed in the second fluid port to adjust a degree of opening of the second fluid port; and a second valve unit disposed in the third fluid port to adjust a degree of opening of the third fluid port.

The three-way valve may further include: a first sensor port disposed in the second fluid port to detect a temperature of the cooling water or the hot water passing through the second fluid port; and a second sensor port disposed in the third fluid port to detect a temperature of the cooling water or the hot water passing through the third fluid port.

According to the present invention, an absorption-type freezing apparatus may include: a first absorber and a second absorber absorbing or releasing refrigerant; a first valve connected to a cooling water supply line and a hot water supply line to selectively direct cooling water or hot water to the first absorber; a second valve connected to the cooling water supply line and the hot water supply line to selectively direct cooling water or hot water to the second absorber; a third valve selectively directing the cooling water or the hot water from the first absorber to the cooling water return line or the hot water return line; and a fourth valve selectively directing the cooling water or the hot water from the second absorber to the cooling water return line or the hot water return line; a condenser connected to the cooling water supply line to condense the refrigerant and supply the condensed refrigerant to an expansion pipe; and an evaporator connected to a cold water supply line and a cold water return line to receive the refrigerant condensed through the expansion pipe and produce cold water by expanding and evaporating the supplied refrigerant.

A time at which the third valve is opened and closed and a time at which the fourth valve is opened and closed may be delayed more than a time at which the first valve is opened and closed and a time at which the second valve is opened and closed
Also provided is an absorption-type freezing system including a plurality of absorption-type freezing apparatuses as described above. The absorption-type freezing apparatuses may be connected to the cooling water supply line and the cooling water return line, the hot water supply line and the hot water return line, and the cold water supply line and the cold water return line, respectively.

The three-way valve and the absorption-type freezing apparatus and system including the same, according to the present invention, can open or close fluid ports disposed in three directions thereof by independently controlling the fluid ports.

The three-way valve and the absorption-type freezing apparatus and system including the same, according to the present invention, can freely control flows and flow rates of fluid by independently controlling the fluid ports.

The three-way valve and the absorption-type freezing apparatus and system including the same, according to the present invention, can open or close valves or control flow rates in a time sequence manner by independent valve control over hot water and cooling water, in accordance with optimum times set for absorption and release within absorbers depending on characteristics of an absorbent, as well as save energy and improve the coefficient of performance of products.

The features and effects of the three-way valve for independently controlling fluid paths and the absorption-type freezing apparatus and system including the same, according to the present invention, are not limited to the those set forth above. The other features and effects will be apparent to a person skilled in the art from the following description.

### BRIEF DESCRIPTION OF THE DRAWINGS

The above and other objects, features and advantages of the present invention will be more clearly understood from the following detailed description when taken in conjunction with the accompanying drawings, in which:
FIG. 1 is a front view schematically illustrating a three-way valve according to an exemplary embodiment;
FIG. 2 is a plan view schematically illustrating the three-way valve according to an exemplary embodiment;
FIG. 3 is a configuration view schematically illustrating an absorption-type freezing apparatus according to an exemplary embodiment;
FIG. 4 is a configuration view schematically illustrating an operation of the absorption-type freezing apparatus according to an exemplary embodiment;
FIG. 5 is a configuration view schematically illustrating an operation of the absorption-type freezing apparatus according to an exemplary embodiment;
FIG. 6 is a configuration view schematically illustrating an operation of the absorption-type freezing apparatus according to an exemplary embodiment;
FIG. 7 is a configuration view schematically illustrating an absorption-type freezing apparatus according to an exemplary embodiment;
FIG. 8 is a configuration view schematically illustrating an absorption-type freezing apparatus according to an exemplary embodiment; and
FIG. 9 is a configuration view schematically illustrating an absorption-type freezing system according to an exemplary embodiment.

### DETAILED DESCRIPTION OF THE INVENTION

Hereinafter, reference will be made to embodiments of the present disclosure in detail, examples of which are illustrated in the accompanying drawings. Throughout this document, reference should be made to the drawings, in which the same reference numerals and symbols will be used to designate the same or like components. In the following description of the present disclosure, detailed descriptions of known functions and components incorporated herein will be omitted in the case that the subject matter of the present disclosure may be rendered unclear thereby.

It will also be understood that, while terms such as "first", "second", "A", "B", "(a)", and "(b)" may be used herein to describe various elements, such terms are merely used to distinguish one element from another element. The substance, sequence, order, or sequence of these elements is not limited by these terms. It will be understood that when an element is referred to as being "connected to", "coupled to", or "plugged to" another element, not only can it be "directly connected, coupled, or plugged to" the other element, but it can also be "indirectly connected, coupled, or plugged to" the other element via an "intervening" element.

Components having the same functions as components included in a specific embodiment will be referred to using the same terms in the other embodiments. Unless otherwise defined, an explanation described in a specific embodiment may be applied to the other embodiments and a detailed description thereof will be omitted when repeated.

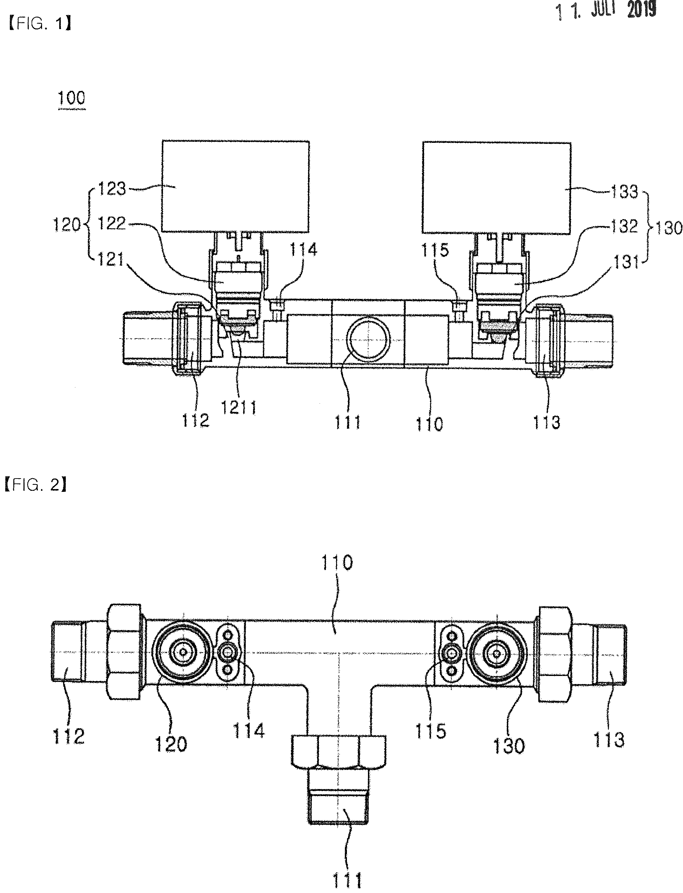

FIG. 1 is a front view schematically illustrating a three-way valve according to an exemplary embodiment, and FIG. 2 is a plan view schematically illustrating the three-way valve according to an exemplary embodiment.

The three-way valve 100 according to an exemplary embodiment can independently control flow paths of fluid ports provided in three directions. The three-way valve 100 may include a valve housing 110, a first valve unit 120, and a second valve unit 130.

The valve housing 110 may extend in three directions. A first fluid port 111, a second fluid port 112, and a third fluid port 113 may be provided in ends of the valve housing 110, extending in the three directions. The first fluid port 111, the second fluid port 112, and the third fluid port 113 allow fluid to flow into the valve housing 110 therethrough or flow from the valve housing 110 therethrough. At least one fluid port of the first fluid port 111, the second fluid port 112, and the third fluid port 113 may act as a fluid inlet, while the other fluid ports may act as fluid outlets. For example, when the first fluid port 111 is a fluid inlet and the second fluid port 112 and the third fluid port 113 are fluid outlets, fluid may flow into the valve housing 110 through the first fluid port 111 and flow from the valve housing 110 through the second fluid port 112 and/or third fluid port 113. In contrast, when the first fluid port 111 is a fluid outlet and the second fluid port 112 and the third fluid port 113 are fluid inlets, fluid may flow into the valve housing 110 through the second fluid port 112 and/or the third fluid port 113 and flow from the valve housing 110 through the first fluid port 111.

The three directions in which the valve housing 110 extends may include a first direction, a second direction, and a third direction, with the second and third directions being collinear with each other while intersecting the first direction. Specifically, the valve housing 110 may be provided with the first fluid port 111 in the first direction, the second fluid port 112 in the second direction, and the third fluid port 113 in the third direction, with the second direction and the third direction being located on the same line, in opposite positions with respect to the first fluid port 111.

The first valve unit 120 may be disposed in the second fluid port 112 to open or close the fluid path of the second fluid port 112 by adjusting the degree of opening of the second fluid port 112. The first valve unit 120 may include a first valve seat 121 having a first hole 1211, a first valve stem 122, and a first actuator 123. The first valve stem 122 may be movably disposed within the second fluid port 112 to open or close the first hole 1211. The first actuator 123 may open or close the fluid path of the second fluid port 112 by adjusting the degree of opening of the first hole 1211 by moving the first valve stem 122 with respect to the first valve seat 121. The second valve unit 130 may be disposed in the third fluid port 113 to open or close the fluid path of the third fluid port 113 by adjusting the degree of opening of the third fluid port 113. The second valve unit 130 may include a second valve seat 131 having a second hole, a second valve stem 132, and a second actuator 133. For example, at least one valve unit of the first valve unit 120 and the second valve unit 130 may be a globe valve, a ball valve, or a butterfly valve. This structure may individually control the fluid paths of the first valve unit 120 and the second valve unit 130 while allowing the first valve unit 120 and the second valve unit 130 to operate independently. In other words, the second fluid port 112 and the third fluid port 113 may be selectively opened, selectively closed, simultaneously opened, or simultaneously closed, while the degrees of opening of the second fluid port 112 and the third fluid port 113 may be controlled independently.

The valve housing 110 may further include a first sensor port 114 and a second sensor port 115 able to detect the temperature of fluid flowing into the valve housing 110. The first sensor port 114 may be disposed in the second fluid port 112 to detect the temperature of fluid (e.g. cooling water or hot water) passing through the second fluid port 112. The first sensor port 114 may be located within the valve housing 110, which is integrated with the second fluid port 112. The second sensor port 115 may be disposed in the third fluid port 113 to detect the temperature of fluid (e.g. cooling water or hot water) passing through the third fluid port 113. The second sensor port 115 may be located within the valve housing 110, which is integrated with the third fluid port 113. According to this structure, when the fluid paths of the second fluid port 112 and the third fluid port 113 are controlled by the operation of the first valve unit 120 and the second valve unit 130, the temperature of fluid flowing into the valve housing 110 through the second fluid port 112 and/or the third fluid port 113 can be detected accurately, so that the degree of opening of the second fluid port 112 and/or the degree of opening of the third fluid port 113 can be controlled accurately.

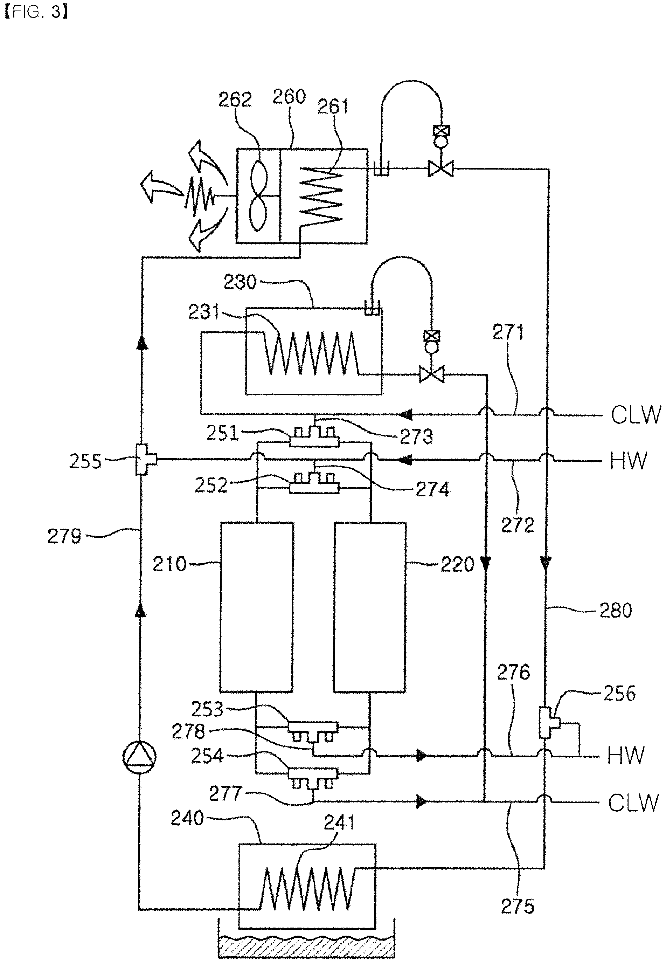

FIG. 3 is a configuration view schematically illustrating an absorption-type freezing apparatus according to an exemplary embodiment.

The absorption-type freezing apparatus according to an exemplary embodiment may include a first absorber 210, a second absorber 220, a condenser 230, an evaporator 240, an cooler and heater 260, a cooling water supply line 271, a hot water supply line 272, a cold water return line 275, a hot water return line 276, and a valve unit including one or more valves.

The first absorber 210 and the second absorber 220 may absorb or release refrigerant. Each of the first absorber 210 and the second absorber 220 may include a moisture absorbent and a heat exchanger. The moisture absorbent may be a film coating on the surface of heat conducting pipes (not shown) and heat conducting fins (not shown) of the heat exchanger or may be grains or pellets filling between the heat conducting fins. The heat exchanger may selectively allow one of cooling water and hot water, supplied from the cooling water supply line or the hot water supply line, to circulate therethrough. For example, the moisture absorbent may be activated carbon, silica gel, zeolite, activated alumina, or the like. For space efficiency, the first absorber 210 and the second absorber 220 may be disposed adjacent to each other, even though the first absorber 210 and the second absorber 220 are independent of each other.

The condenser 230 may liquefy refrigerant by removing condensation heat from the refrigerant by cooling. The condenser 230 may be connected to the first absorber 210 and the second absorber 220 to be supplied with the refrigerant released from the first absorber 210 and the second absorber 220 and condense the supplied refrigerant. The condenser 230 may include a condenser heat exchanger 231, within which cooling water circulates. The condenser 230 may be connected to the cooling water supply line 271, allowing cooling water to circulate therewithin so as to be condensed by heat exchange with cooling water.

The evaporator 240 may be connected to the condenser 230 to be supplied with the condensed refrigerant. The evaporator 240 may evaporate the refrigerant being supplied through an expansion pipe or an expansion valve to produce cold water using evaporation heat generated by the evaporating refrigerant. In this regard, the evaporator 240 may include an evaporator heat exchanger 241, within which water circulates to produce cold water. The evaporator 240 may selectively supply the evaporated refrigerant to one absorber of the first absorber 210 and the second absorber 220.

The cooler and heater 260 may cool the air using cold water produced and supplied by the evaporator 240 or may heat the air using hot water supplied through the hot water supply line 272. The cooler and heater 260 may include a cooler and heater heat exchanger 261, through which cold water or hot water circulates, and an air blower 262 producing a current of air.

The valve unit may control the circulation of cold water or hot water flowing between the evaporator 240 and the cooler and heater 260. The valve unit may be respectively connected to the evaporator 240 and the cooler and heater 260 and may be connected to at least one line of the cooling water supply line 271, the hot water supply line 272, the cold water return line 275, and the hot water return line 276. The valve unit may include a first valve 251, a second valve 252, a third valve 253, a fourth valve 254, a fluid supply valve 255, and a fluid return valve 256, which are three-way valves according to an exemplary embodiment.

The first valve 251 may be disposed on the cooling water supply line 271 and a fluid path 273 connecting the first absorber 210 and the second absorber 220, allowing the opening or closing of a fluid port (not shown) of the third valve 253 to be controlled so that cooling water supplied through the cooling water supply line 271 can be selectively supplied to one absorber of the first absorber 210 and the second absorber 220.

The second valve 252 may be disposed on the hot water supply line 272 and a fluid path 274 connecting the first absorber 210 and the second absorber 220, allowing the opening or closing of a fluid port (not shown) of the fourth valve 254 to be controlled so that hot water supplied through the hot water supply line 272 can be selectively supplied to one absorber of the first absorber 210 and the second absorber 220.

The third valve 253 may be disposed on a fluid path 278 connecting the first absorber 210 and the second absorber 220 to the hot water return line 276 to selectively connect the first absorber 210 and the second absorber 220 to the hot water return line 276, so that hot water released from one absorber of the first absorber 210 and the second absorber 220 can be supplied to the hot water return line 276.

The fourth valve 254 may be disposed on a fluid path 277 connecting the first absorber 210 and the second absorber 220 to the cold water return line 275 to selectively connect the first absorber 210 and the second absorber 220 to the cold water return line 275, so that cooling water released from one absorber of the first absorber 210 and the second absorber 220 can be supplied to the cold water return line 275.

Times at which the third valve 253 and the fourth valve 254 are opened and closed may be delayed more than times at which the first valve 251 and the second valve 252 are opened and closed. When the first valve 251 supplies cooling water from the cooling water supply line 271 to one absorber of the first absorber 210 and the second absorber 220, and the second valve supplies hot water from the hot water supply line 272 to one absorber of the first absorber 210 and the second absorber 220, conversion points in time at which the first valve 251 and the second valve 252 supply cooling water or hot water to one absorber of the first absorber 210 and the second absorber 220, i.e. the time at which the first valve 351 is opened and closed and the time at which the second valve 352 is opened and closed, may be the same. Likewise, the times at which the third valve 353 and the fourth valve 354 are opened and closed may be the same. In this case, the conversion points in time at which the third valve 353 and the fourth valve 354 supply cooling water or hot water may be delayed more than the conversion points in time at which the first valve 351 and the second valve 352 supply cooling water or hot water.

According to the above-described manner, the time at which cooling water or hot water is released from the first absorber 210 or the second absorber 220 is delayed less than the time at which cooling water or hot water is supplied to the first absorber 210 or the second absorber 220. Then, the first absorber 210 or the second absorber 220 is subjected a load, so that cooling water is converted into hot water by residual heat or hot water is converted into cooling water. A temperature change range of cooling water or hot water supplied to the cooling water return line 275 or the hot water return line 276 is shortened. This can consequently improve heat efficiency.

The fluid supply valve 255 may selectively supply one of cold water produced by the evaporator 240 and hot water supplied from the hot water supply line 272 to the cooler and heater 260. The first valve 251 may be disposed on a fluid path 279 connecting an outlet side of the evaporator 240 and an inlet side of the cooler and heater 260. According to this structure, the fluid supply valve 255 may connect the fluid paths of the evaporator 240 and the cooler and heater 260 or the fluid paths of the cooler and heater 260 and the hot water supply line 272 to selectively supply cold water or hot water to the cooler and heater 260, thereby realizing space efficiency, improving the heat efficiency of the cooler and heater 260 at low costs, and reducing unnecessary wastage of energy.

The fluid return valve 256 may selectively supply cold water or hot water, circulating in the cooler and heater 260, to one of the hot water return line 276 and the evaporator 240. The fluid return valve 256 may be disposed on a fluid path 280 connecting an outlet side of the cooler and heater 260 and an inlet side of the evaporator 240. According to this structure, the fluid return valve 256 may connect the fluid paths of the evaporator 240 and the cooler and heater 260 or the fluid paths of the cooler and heater 260 and the hot water return line 276 to constitute a closed circuit of an absorption-type freezing apparatus, realizing space efficiency at low costs, and saving energy by recycling fluid used in the cooler and heater 260 or re-supplying the fluid used in the cooler and heater 260 to the evaporator 240.

According to this structure, refrigerant may be absorbed to one absorber of the first absorber 210 and the second absorber 220 due to cooling water being supplied thereto, while refrigerant may be released from the other absorber due to hot water being supplied thereto. Consequently, the refrigerant released from the absorber may be introduced into the condenser 230 to be converted into liquid refrigerant. The refrigerant, liquefied in the condenser 230, may be supplied to the evaporator 240, where the refrigerant evaporates to cool water, thereby producing cold water. The refrigerant, evaporated in the evaporator 240, may be introduced into the first absorber 210 and the second absorber 220.

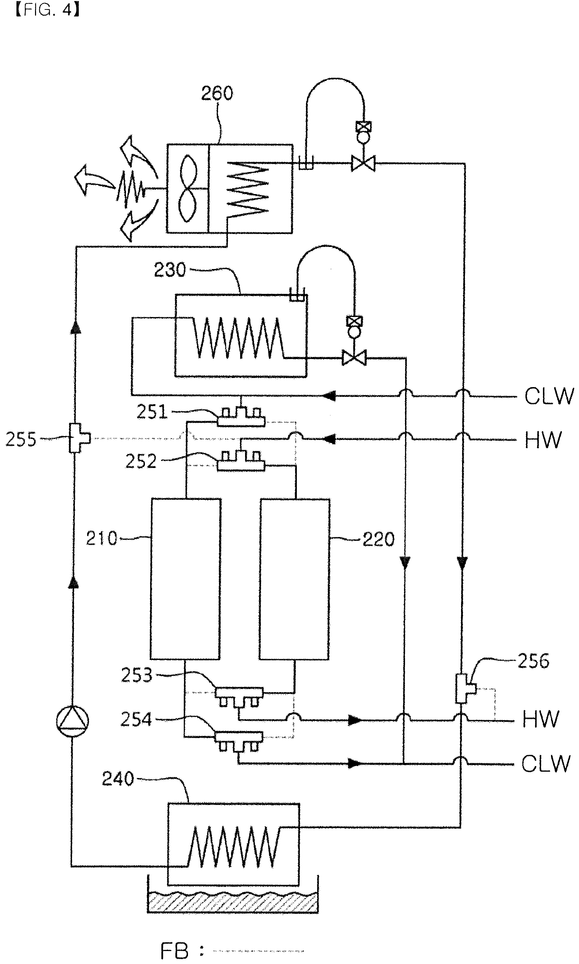

FIG. 4 is a configuration view schematically illustrating an operation of the absorption-type freezing apparatus according to an exemplary embodiment.

When cooling water is supplied to the first absorber 210 and hot water is supplied to the second absorber 220, refrigerant may be absorbed to the first absorber 210 and refrigerant may be released from the second absorber 220.

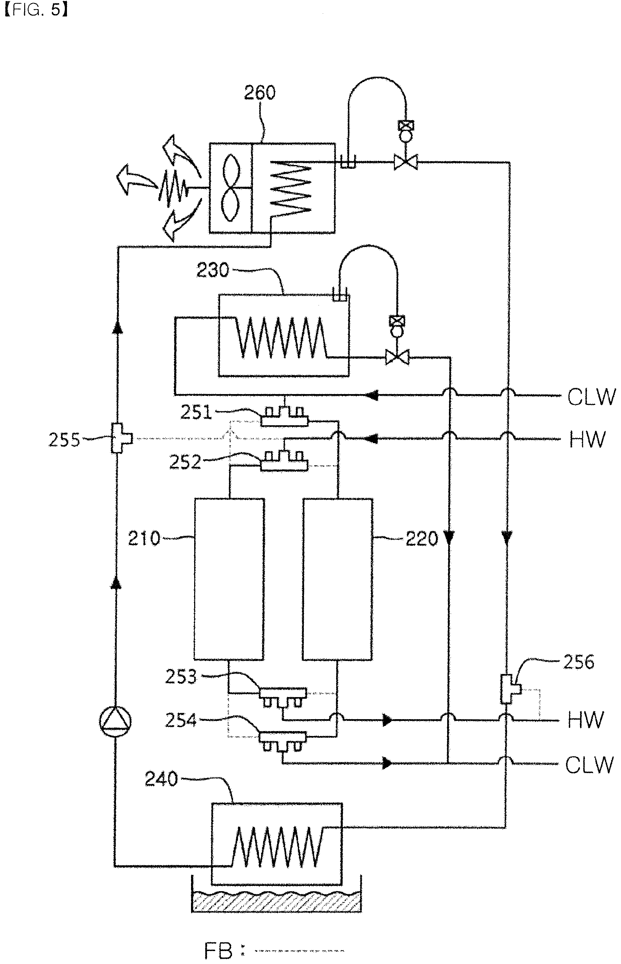

FIG. 5 is a configuration view schematically illustrating an operation of the absorption-type freezing apparatus according to an exemplary embodiment.

When hot water is supplied to the first absorber 210 and cooling water is supplied to the second absorber 220, refrigerant may be released from the first absorber 210 and refrigerant may be absorbed to the second absorber 220.

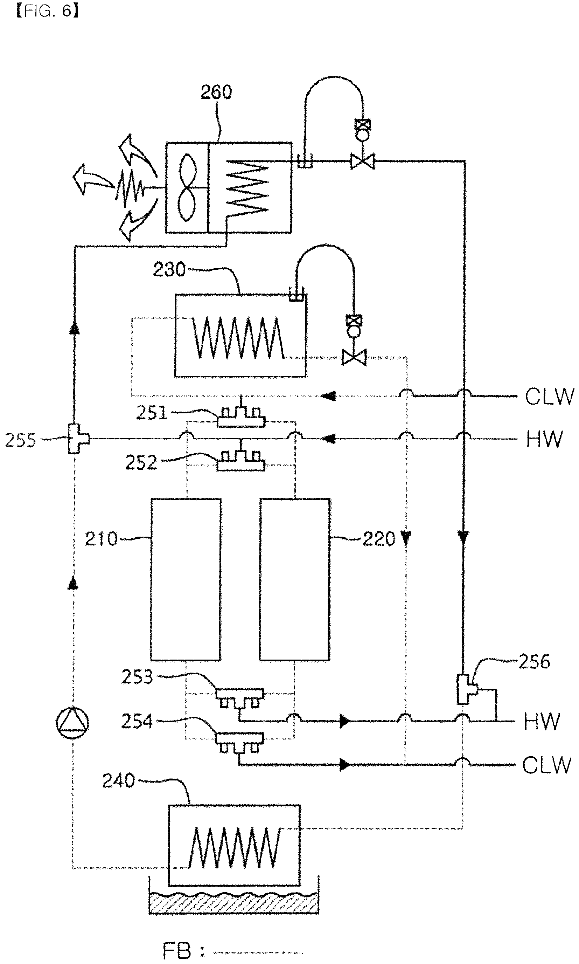

FIG. 6 is a configuration view schematically illustrating an operation of the absorption-type freezing apparatus according to an exemplary embodiment.

Heating may be performed by blocking both the supply of cooling water and the supply of hot water to the first absorber 210 and the second absorber 220 and supplying hot water to the cooler and heater 260.

According to this structure, the absorption-type freezing apparatus may independently control flows and flow rates of cooling water and hot water, supplied to the first absorber 210 and the second absorber 220, using the three-way valve, the fluid paths of which can be controlled independently, so that the first absorber 210 and the second absorber 220 can be asynchronously supplied with cooling water and hot water, and amounts of cooling water and hot water to be supplied can be controlled in accordance with the absorption of refrigerant and the release of refrigerant. This can consequently reduce the excessive use of cooling water and hot water, thereby saving energy and improving the coefficient of performance of the absorption-type freezing apparatus.

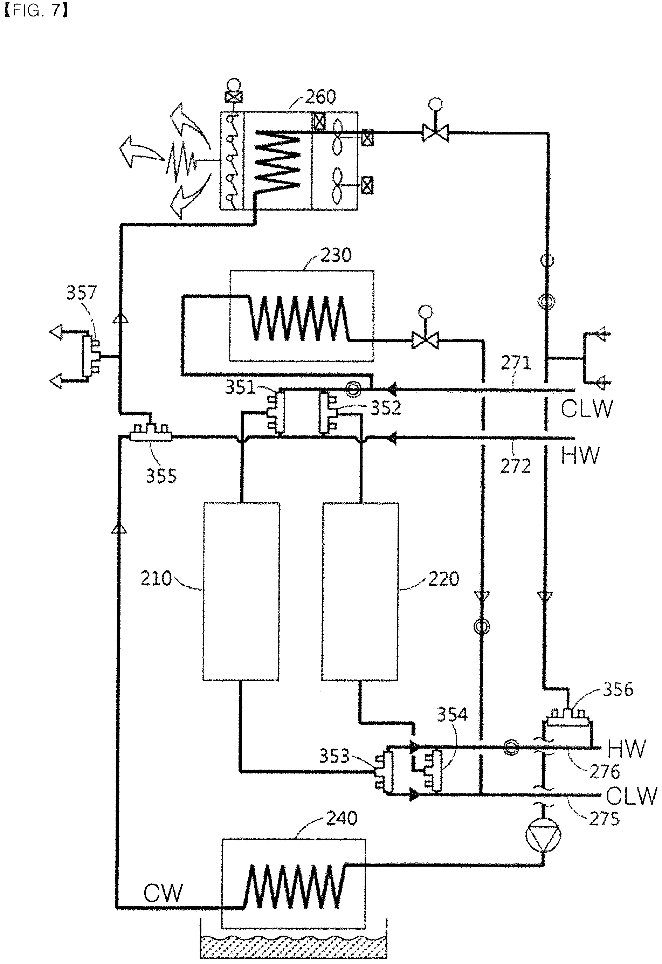

FIG. 7 is a configuration view schematically illustrating an absorption-type freezing apparatus according to an exemplary embodiment.

The absorption-type freezing apparatus may include a first absorber 210, a second absorber 220, a condenser 230, an evaporator 240, a cooler and heater 260, a cooling water supply line 271, a hot water supply line 272, a cold water return line 275, a hot water return line 276, a first valve 351, a second valve 352, a third valve 353, a fourth valve 354, a fluid supply valve 355, a fluid return valve 356, and a fluid discharge valve 357.

The first valve 351 may be connected to the cooling water supply line 271 and the hot water supply line 272 to selectively direct cooling water from the cooling water supply line 271 or hot water from the hot water supply line 272 to the first absorber 210.

The second valve 352 may be connected to the cooling water supply line 271 and the hot water supply line 272 to selectively direct cooling water from the cooling water supply line 271 or hot water from the hot water supply line 272 to the second absorber 220.

The third valve 353 may be connected to the first absorber 210, the cold water return line 275, and the hot water return line 276 to selectively direct cooling water or hot water from the first absorber 210 to the cold water return line 275 or the hot water return line 276.

The fourth valve 354 may be connected to the second absorber 220, the cold water return line 275, and the hot water return line 276 to selectively direct cooling water or hot water from the second absorber 220 to the cold water return line 275 or the hot water return line 276.

According to this structure, it is possible to independently control flows and flow rates of cooling water and hot water, supplied to the first absorber 210 and the second absorber 220, using the three-way valve, the fluid paths of which can be controlled independently, thereby reducing the excessive use of cooling water and hot water and thus saving energy.

Times at which the third valve 353 and the fourth valve 354 are opened and closed may be delayed more than times at which the first valve 351 and the second valve 352 are opened and closed. When the first valve 351 supplies one of cooling water supplied from the cooling water supply line 271, and hot water supplied from the hot water supply line 272, to the first absorber 210 and the second valve supplies one of cooling water supplied from the cooling water supply line 271, and hot water supplied from the hot water supply line 272, to the second absorber 220, a conversion point in time at which the first valve 351 supplies cooling water or hot water to the first absorber 210, i.e. the time at which the first valve 351 is opened and closed, and a conversion point in time at which the second valve 352 supplies cooling water or hot water to the second absorber 220, i.e. the time at which the second valve 352 is opened and closed, may be the same. Likewise, the times at which the third valve 353 and the fourth valve 354 are opened and closed may be the same. In this case, the conversion points in time at which the third valve 353 and the fourth valve 354 supply cooling water or hot water may be delayed more than the conversion points in time at which the first valve 351 and the second valve 352 supply cooling water or hot water.

The fluid discharge valve 357 may be disposed on a fluid path connecting the fluid supply valve 355 and the cooler and heater 260 to discharge cold water or hot water, supplied from the fluid supply valve 355, to an external area. Here, the external area may be a separate small space, such as a hall or an office having a specific size or more. According to this structure, the fluid discharge valve 357 may be a branch pipe regulating valve to selectively supply an extra amount of cold water or hot water to a separate small space, allowing a terminal device, such as a fan coil unit, including a fan and a heat exchanger to be operated in the small space. A separate line supplying cold water or hot water to the separate space via the fluid discharge valve 357 may be added.

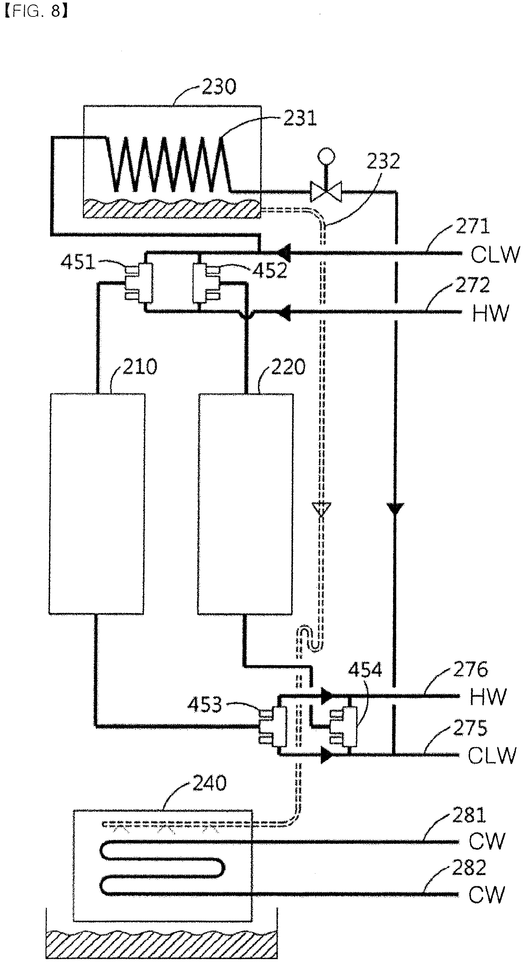

FIG. 8 is a configuration view schematically illustrating an absorption-type freezing apparatus according to an exemplary embodiment.

The absorption-type freezing apparatus may include a first absorber 210, a second absorber 220, a condenser 230 including a condenser heat exchanger 231, an expansion pipe 232, an evaporator 240, a first valve 451, a second valve 452, a third valve 453, and a fourth valve 454.

The expansion pipe 232 may be connected to the condenser heat exchanger 231 to direct condensed refrigerant, received from the condenser 230, to the evaporator 240. One end of the expansion pipe 232 may be located within the evaporator 240. In this case, condensed refrigerant, supplied from the condenser 230, may expand in the one end of the expansion pipe 232 while being supplied into the evaporator 240, within which a cold water supply line 281 and a cold water return line 282 extends. Cold water flows into the absorption-type freezing apparatus along the cold water supply line 281 and flows out of the absorption-type freezing apparatus along the cold water return line 282. In this process, expanding refrigerant may evaporate, thereby producing cold water, which in turn may be supplied to the cold water return line 282.

The first valve 451 may be connected to the cooling water supply line 271 and the hot water supply line 272, and may be controlled to selectively direct cooling water or hot water from the cooling water supply line 271 or the hot water supply line 272 to the first absorber 210.

The second valve 452 may be connected to the cooling water supply line 271 and the hot water supply line 272, and may be controlled to selectively direct cooling water or hot water from the cooling water supply line 271 or the hot water supply line 272 to the second absorber 220.

The third valve 453 may be connected to the cooling water return line 275 and the hot water return line 276, and may be controlled to selectively direct cooling water or hot water from the first absorber 210 to the cooling water return line 275 or the hot water return line 276.

The fourth valve 454 may be connected to the cooling water return line 275 and the hot water return line 276, and may be controlled to selectively direct cooling water or hot water from the second absorber 220 to the cooling water return line 275 or the hot water return line 276.

According to this structure, the three-way valve may be used in an absorption-type freezing apparatus without a cooler and heater.

Times at which the third valve 453 and the fourth valve 454 are opened and closed may be delayed more than times at which the first valve 451 and the second valve 452 are opened and closed.

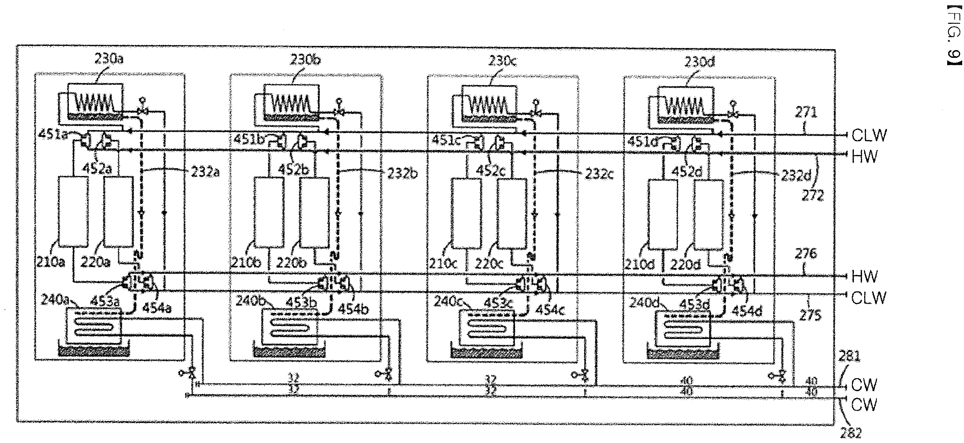

FIG. 9 is a configuration view schematically illustrating an absorption-type freezing system according to an exemplary embodiment.

The absorption-type freezing system according to an exemplary embodiment may include a plurality of absorption-type freezing apparatuses, a cooling water supply line 271, a hot water supply line 272, a cooling water return line 275, a hot water return line 276, a cold water supply line 281, and a cold water return line 282.

Each of the plurality of absorption-type freezing apparatuses may include a first absorber 210a, 210b, 210c, or 210d, a second absorber 220a, 220b, 220c, or 220d, a condenser 230a, 230b, 230c, or 230d, an evaporator 240a, 240b, 240c, or 240d, a first valve 451a, 451b, 451c, or 451d, a second valve 452a, 452b, 452c, or 452d, a third valve 453a, 453b, 453c, or 453d, a fourth valve 454a, 454b, 454c, and 454d, and an expansion pipe 232a, 232b, 232c, and 232d.

According to this structure, the three-way valve may be used not only in separate absorption-type freezing apparatuses, but also in the modular absorption-type freezing system comprised of a plurality of absorption-type freezing apparatuses. In this case, the absorption-type freezing system having a larger output capacity may be fabricated by connecting a number of single absorption-type freezing apparatuses having a small output capacity as many as required, and may be operated at high efficiency in response to load fluctuations (partial loads) as required. In addition, the smaller absorption-type freezing apparatuses constituting the modular absorption-type freezing system may be transported at higher space efficiency than a larger absorption-type freezing apparatus, thereby overcoming space limitations or carriage restrictions.

Although the exemplary embodiments have been described with reference to the specific embodiments and the drawings, a person skilled in the art will appreciate that various modifications and variations are possible from the foregoing disclosure. For example, although the foregoing embodiments are carried out in different sequences from the foregoing descriptions and/or the foregoing system, structure, apparatus, and components, such as circuits, are assembled or combined in different methods or shapes from the foregoing descriptions or substituted or replaced by the other components or equivalents, an appropriate result may be realized.

## Claims

1. An absorption-type freezing apparatus comprising:
a first absorber and a second absorber to which one of cooling water and hot water is selectively supplied from a cooling water supply line or a hot water supply line, the first absorber and the second absorber absorbing or releasing refrigerant;
a condenser connected to the first absorber and the second absorber, the condenser condensing the refrigerant released and supplied from the first absorber or the second absorber;
an evaporator receiving the condensed refrigerant, producing cold water using evaporation heat generated when the refrigerant evaporates, and selectively supplying the evaporated refrigerant to one absorber of the first absorber and the second absorber;
a first valve comprising a three-way valve connected to the cooling water supply line, the first absorber, and the second absorber, wherein the first valve selectively directs the cooling water from the cooling water line to the first absorber or the second absorber and controls a flow rate of the cooling water directed to the first absorber or the second absorber;
a second valve comprising a three-way valve connected to the hot water supply line, the first absorber, and the second absorber, wherein the second valve selectively directs the hot water from the hot water supply line to the first absorber or the second absorber and controls a flow rate of the hot water directed to the first absorber or the second absorber;
a third valve comprising a three-way valve connected to the first absorber, the second absorber, and a hot water return line, wherein the third valve selectively directs the hot water from the first absorber or the second absorber to the hot water return line and controls a flow rate of the hot water directed to the hot water return line; and
a fourth valve comprising a three-way valve connected to the first absorber, the second absorber, and a cooling water return line, wherein fourth valve selectively directs the cooling water from the first absorber or the second absorber to the cooling water return line and controls a flow rate of the cooling water directed to the cooling water return line.

2. The absorption-type freezing apparatus according to claim 1, wherein a time at which the third valve is opened and closed and a time at which the fourth valve is opened and closed are delayed more than a time at which the first valve is opened and closed and a time at which the second valve is opened and closed.

3. The absorption-type freezing apparatus according to claim 1, further comprising a cooler and heater cooling or heating air using the hot water supplied from the hot water supply line or the cold water produced in the evaporator.

4. The absorption-type freezing apparatus according to claim 3, further comprising:
a fluid supply valve disposed on a fluid path connecting a discharge side of th evaporator and an inlet side of the cooler and heater to selectively direct one of the cold water produced in the evaporator and the hot water from the hot water supply line to the cooler and heater; and
a fluid return valve disposed on a fluid path connecting a discharge side of the cooler and heater and an inlet side of the evaporator to selectively direct the cold water or the hot water circulating in the cooler and heater to one of the evaporator and the hot water return line.

5. The absorption-type freezing apparatus according to claim 3, further comprising: a fluid discharge valve disposed on a fluid path connecting the evaporator and the cooler and heater to discharge the cold water from the cooler and heater or the hot water from the hot water supply line to an external area.

6. The absorption-type freezing apparatus according to claim 1, wherein the three-way valve comprises:
a valve housing having a first fluid port, a second fluid port, and a third fluid port, with the second fluid port and the third fluid port being located on a single line intersecting the first fluid port;
a first valve unit disposed in the second fluid port to adjust a degree of opening of the second fluid port;
a first sensor port disposed in the second fluid port to detect a temperature of the cooling water or the hot water passing through the second fluid port;
a second valve unit disposed in the third fluid port to adjust a degree of opening of the third fluid port; and
a second sensor port disposed in the third fluid port to detect a temperature of the cooling water or the hot water passing through the third fluid port.

7. An absorption-type freezing apparatus comprising:
a first absorber and a second absorber absorbing or releasing refrigerant;
a first valve comprising a three-way valve connected to a coling water supply line, a hot water supply line, and the first absorber, wherein the first valve selectively directs cooling water or hot water from the cooling water supply line or the hot water supply line to the first absorber and controls a flow rate of the cooling water or a flow rate of the hot water directed to the first absorber;
a second valve comprising a three-way valve connected to the cooling water supply line, the hot water supply line, and the second absorber, wherein the second valve selectively directs the cooling water or the hot water from the cooling water supply line or the hot water supply line to the second absorber and controls a flow rate of the cooling water or a flow rate of the hot water directed to the second absorber;
third valve comprising a three-way valve connected to the first absorber, a cooling water return line, and a hot water return line, wherein the third valve selectively directs the cooling water or the hot water from the first absorber to the cooling water return line or the hot water return line and controls a flow rate of the cooling water directed to the cooling water return line or a flow rate of the hot water directed to the hot water return line;
a fourth valve comprising a three-way valve connected to the second absorber, the cooling water return line, and the hot water return line, wherein the fourth valve selectively directs the cooling water or the hot water from second absorber to the cooling water return line or the hot water return line and controls a flow rate of the cooling water directed to the cooling water return line or a flow rate of the hot water directed to the hot water return line;
a condenser connected to the cooling water supply line to condense the refrigerant and supply the condensed refrigerant to an expansion pipe; and
an evaporator connected to a cold water supply line and a cold water return line to receive the refrigerant condensed through the expansion pipe and produce cold water by expanding and evaporating the supplied refrigerant.

8. The absorption-type freezing apparatus according to claim 7, wherein a time at which the third valve is opened and closed and a time at which the fourth valve is opened and closed are delayed more than a time at which the first valve is opened and closed and a time at which the second valve is opened and closed.

9. An absorption-type freezing system comprising: a plurality of absorption-type freezing apparatuses as claimed in claim 1, the absorption-type freezing apparatuses being connected to the cooling water supply line and the cooling water return line, the hot water supply line and the hot water return line, and the cold water supply line and the cold water return line, respectively.

10. An absorption-type freezing system comprising: a plurality of absorption-type freezing apparatuses as claimed in claim 7, the absorption-type freezing apparatuses being connected to the cooling water supply line and the cooling water return line, the hot water supply line and the hot water return line, and the cold water supply line and the cold water return line, respectively.

## Amended claims

### Amended claims under Art. 19.1 PCT

1. An absorption-type freezing apparatus comprising:
a first absorber and a second absorber to which one of cooling water and hot water is selectively supplied from a cooling water supply line or a hot water supply line, the first absorber and the second absorber absorbing or releasing refrigerant;
a condenser connected to the first absorber and the second absorber, the condenser condensing the refrigerant released and supplied from the first absorber or the second absorber;
an evaporator receiving the condensed refrigerant, producing cold water using evaporation heat generated when the refrigerant evaporates, and selectively supplying the evaporated refrigerant to one absorber of the first absorber and the second absorber;
a first valve comprising a three-way valve connected to the cooling water supply line, the first absorber, and the second absorber, wherein the first valve selectively directs the cooling water from the cooling water line to the first absorber or the second absorber and controls a flow rate of the cooling water directed to the first absorber or the second absorber;
a second valve comprising a three-way valve connected to the hot water supply line, the first absorber, and the second absorber, wherein the second valve selectively directs the hot water from the hot water supply line to the first absorber or the second absorber and controls a flow rate of the hot water directed to the first absorber or the second absorber;
a third valve comprising a three-way valve connected to the first absorber, the second absorber, and a hot water return line, wherein the third valve selectively directs the hot water from the first absorber or the second absorber to the hot water return line and controls a flow rate of the hot water directed to the hot water return line; and
a fourth valve comprising a three-way valve connected to the first absorber, the second absorber, and a cooling water return line, wherein fourth valve selectively directs the cooling water from the first absorber or the second absorber to the cooling water return line and controls a flow rate of the cooling water directed to the cooling water return line.

2. The absorption-type freezing apparatus according to claim 1, wherein a time at which the third valve is opened and closed and a time at which the fourth valve is opened and closed are delayed more than a time at which the first valve is opened and closed and a time at which the second valve is opened and closed.

3. The absorption-type freezing apparatus according to claim 1, further comprising a cooler and heater cooling or heating air using the hot water supplied from the hot water supply line or the cold water produced in the evaporator.

4. The absorption-type freezing apparatus according to claim 3, further comprising:
a fluid supply valve disposed on a fluid path connecting a discharge side of the evaporator and an inlet side of the cooler and heater to selectively direct one of the cold water produced in the evaporator and the hot water from the hot water supply line to the cooler and heater; and
a fluid return valve disposed on a fluid path connecting a discharge side of the cooler and heater and an inlet side of the evaporator to selectively direct the cold water or the hot water circulating in the cooler and heater to one of the evaporator and the hot water return line.

5. The absorption-type freezing apparatus according to claim 3, further comprising: a fluid discharge valve disposed on a fluid path connecting the evaporator and the cooler and heater to discharge the cold water from the cooler and heater or the hot water from the hot water supply line to an external area.

6. The absorption-type freezing apparatus according to claim 1, wherein the three-way valve comprises:
a valve housing having a first fluid port, a second fluid port, and a third fluid port, with the second fluid port and the third fluid port being located on a single line intersecting the first fluid port;
a first valve unit disposed in the second fluid port to adjust a degree of opening of the second fluid port;
a first sensor port disposed in the second fluid port to detect a temperature of the cooling water or the hot water passing through the second fluid port;
a second valve unit disposed in the third fluid port to adjust a degree of opening of the third fluid port; and
a second sensor port disposed in the third fluid port to detect a temperature of the cooling water or the hot water passing through the third fluid port.

7. An absorption-type freezing apparatus comprising:
a first absorber and a second absorber absorbing or releasing refrigerant;
a first valve comprising a three-way valve connected to a cooling water supply line, a hot water supply line, and the first absorber, wherein the first valve selectively directs cooling water or hot water from the cooling water supply line or the hot water supply line to the first absorber and controls a flow rate of the cooling water or a flow rate of the hot water directed to the first absorber;
a second valve comprising a three-way valve connected to the cooling water supply line, the hot water supply line, and the second absorber, wherein the second valve selectively directs the cooling water or the hot water from the cooling water supply line or the hot water supply line to the second absorber and controls a flow rate of the cooling water or a flow rate of the hot water directed to the second absorber;
a third valve comprising a three-way valve connected to the first absorber, a cooling water return line, and a hot water return line, wherein the third valve selectively directs the cooling water or the hot water from the first absorber to the cooling water return line or the hot water return line and controls a flow rate of the cooling water directed to the cooling water return line or a flow rate of the hot water directed to the hot water return line;
a fourth valve comprising a three-way valve connected to the second absorber, the cooling water return line, and the hot water return line, wherein the fourth valve selectively directs the cooling water or the hot water from second absorber to the cooling water return line or the hot water return line and controls a flow rate of the cooling water directed to the cooling water return line or a flow rate of the hot water directed to the hot water return line;
a condenser connected to the cooling water supply line to condense the refrigerant and supply the condensed refrigerant to an expansion pipe; and
an evaporator connected to a cold water supply line and a cold water return line to receive the refrigerant condensed through the expansion pipe and produce cold water by expanding and evaporating the supplied refrigerant.

8. The absorption-type freezing apparatus according to claim 7, wherein a time at which the third valve is opened and closed and a time at which the fourth valve is opened and closed are delayed more than a time at which the first valve is opened and closed and a time at which the second valve is opened and closed.

9. An absorption-type freezing system comprising: a plurality of absorption-type freezing apparatuses as claimed in claim 1, the absorption-type freezing apparatuses being connected to the cooling water supply line and the cooling water return line, the hot water supply line and the hot water return line, and the cold water supply line and the cold water return line, respectively.

10. An absorption-type freezing system comprising: a plurality of absorption-type freezing apparatuses as claimed in claim 7, the absorption-type freezing apparatuses being connected to the cooling water supply line and the cooling water return line, the hot water supply line and the hot water return line, and the cold water supply line and the cold water return line, respectively.
